# EUROPEAN PATENT APPLICATION

(11) **EP 1 655 069 A1**
(43) Date of publication of application: **10.05.2006**
(21) Application number: 04254726.5
(22) Date of filing: 05.08.2004
(51) Int. Cl.: B01J 19/00, C40B 50/18, C12Q 1/68

(54) **Modified molecular arrays**

(71) Applicant: Solexa Limited, Nr. Saffron Walden, Essex CB10 1XL (GB)
(72) Inventor: The designation of the inventor has not yet been filed
(74) Representative: Baldock, Sharon Claire

(57) **Abstract**

The invention provides a method of modifying a molecular array, which molecular array comprises a plurality of biomolecules immobilised to a surface of a support, said method comprising the step of applying to the array polyelectrolyte or neutral polymers.

## Description

### FIELD OF THE INVENTION

This invention relates to the construction of arrays of molecules. In particular, the invention relates to the chemical modification of arrays of molecules useful in the manipulation of arrays of molecules, particularly of polynucleotides.

### BACKGROUND

Advances in the study of molecules have been led, in part, by improvement in technologies used to characterise the molecules or their biological reactions. In particular, the study of nucleic acids, such as DNA and RNA, and other large biological molecules, such as proteins, has benefited from developing technologies used for sequence analysis and the study of hybridisation events.

An example of the technologies that have improved the study of nucleic acids is the development of fabricated arrays of immobilised nucleic acids. These arrays typically consist of a high-density matrix of polynucleotides immobilised onto a solid support material. Fodor et al., *Trends in Biotechnology* (1994) 12:19-26, describe ways of assembling the nucleic acid arrays using a chemically sensitised glass surface protected by a mask, but exposed at defined areas to allow attachment of suitably modified nucleotides. Typically, these arrays may be described as "many molecule" arrays, as distinct regions are formed on the solid support comprising a high density of one specific type of polynucleotide.

An alternative approach is described by Schena et al., *Science* (1995) 270:467-470, where samples of DNA are positioned at predetermined sites on a glass microscope slide by robotic micropipetting techniques.

A further development in array technology is the attachment of the polynucleotides to a solid support material to form single molecule arrays (SMAs). Arrays of this type are disclosed in WO00/06770. The advantage of these arrays is that reactions can be monitored at the single molecule level and information on large numbers of single molecules can be collated from a single reaction.

Although these arrays offer particular advantages in sequencing experiments, the preparation of arrays at the single molecule level is more difficult than at the multi-molecule level, where losses of target polynucleotide can be tolerated due to the multiplicity of the array. Moreover, where the sequence of a polynucleotide is determined by sequential incorporations of labelled nucleotides, a further problem which arises is the occurrence of non-specific binding of nucleotides to the array, for example to the surface of the array. There is, therefore, a constant need for improvements in the preparation of arrays of molecules, particularly polynucletoides, for example single molecule arrays of polynucleotides, for sequencing procedures.

Solid-supported molecular arrays have been generated previously in a variety of ways. Silica-based substrates such as silica or glass are often employed as supports on which molecular arrays are constructed.

Prior to the construction of any silica-based solid-supported arrays, the support surface is generally thoroughly cleaned. The resultant cleaned surface possess hydroxyl groups which are either neutral and/or deprotonated and thus negatively charged. As a result there is a degree of resistance to non-specific binding of nucleotides used in sequencing experiments. Either the neutral hydroxyl groups do not attract the negatively charged nucleotides, or the deprotonated groups' negative charge serves to repel the nucleotides. Regardless, the effect of the surface towards the aspecific, and undesired binding of nucleotides is not high and it is desirable to lessen the extent of non-specific binding in sequencing experiments. This serves to reduce background "noise" during the detection of each individual nucleotide in each step in sequencing experiments.

Another way in which polynucleotides and (other molecules) have been displayed previously on the surface of solid supports is through the use of hydrogels. Microarrays of molecules, particularly polynucleotides, are of use in techniques including nucleic acid amplification and sequencing methods. In preparing hydrogel-based solid-supported molecular arrays, a hydrogel is formed and molecules displayed from it. These two features - formation of the hydrogel and construction of the array - may be effected sequentially or simultaneously.

Where the hydrogel is formed prior to formation of the array, it is typically produced by allowing a mixture of comonomers to polymerise. Generally, the mixture of comonomers contain acrylamide and one or more comonomers, the latter of which in part subsequently permit immobilisation of molecules of interest so as to form the molecular array.

The comonomers used to create the hydrogel typically contain a functionality that serves to participate in crosslinking of the hydrogel and/or immobilise the hydrogel to the solid support and facilitate association with the target molecules of interest.

Whilst these functional groups are useful in immobilising the hydrogel to the support and the molecules which are desired to be displayed to the hydrogel, there is nevertheless found in practice a degree of non-specific binding of nucleotides during the practising of sequencing experiments on hydrogel-based arrays.

In our copending UK application patent number 0400253.1, we disclose the construction of specific hydrogels which do not require prior modification of the solid support in order to immobilise the hydrogel. Notwithstanding this, however, the particular hydrogels disclosed in UK application patent number 0400253.1 have functionality used in forming the molecules which are arrayed. Consequentially, these hydrogels too suffer, to a certain extent, from a degree of aspecific nucleotide binding during sequencing.

As an alternative to the use of hydrogel-supported molecular arrays, the use of polyelectrolyte multilayers (PEMs)has been reported *(E.P. Kartov et al., Biotechniques (March 2003), 34:505-510; and I. Braslavsky et al., Proct Nat. Acad. Sci (1 April 2003), 100 (7), 3960-3964*) sequencing experiments to be conducted in which fluorescently labelled molecules are incorporated into DNA strands and then identified by fluorescence microscopy. The authors report that, by using PEMs, the charge density on the surface may be tuned so as to repel labelled nucleotides selectively by constructing the PEMs such that the final layer bears a negative charge.

Accordingly, the authors constructed such a PEM which, after its construction was used in the formation of a molecular array. The latter was formed by initially biotinylating the surface using a commercially available kit (EZ-Link™ kit from Pierce Chemical (Rockford, IL, USA)). The biotinylated PEM was then coated with Streptavidin-Plus™ (Prozyme, San Leandro, CA, USA) to which biotinylated DNA was attached. In this way the biotinylated DNA is attached to covalently bound biotin through specific non-covalent interactions to "sandwiched" streptavidin molecules.

The authors of *E.P. Kartov et al*. (infra) and *I. Braslavsky et al*. (two authors are common to both publications) report that the final, negatively charged, polyacrylic acid layer is intended to prevent negatively charged labelled nucleotides binding to the surface. It is clear, however, that this was not successful in every instance since it is reported in *I. Braslavsky et. al*. *(infra)* that the identity of the third or fourth incorporated nucleotide could not be determined (was "ambiguous"). According to the authors, this was caused by "increasing non-specific binding of unincorporated nucleotides".

Accordingly, there exists a need for a method of providing arrays of molecules, particularly polynucleotides, which arrays have a lesser tendency to interact non-specifically with other molecules (and in particular (optionally fluorescently labelled) nucleotides used in sequencing experiments) than those available in the prior art.

### SUMMARY OF THE INVENTION

From the foregoing discussion, it will be appreciated that, in the preparation of arrays of molecules to date, particularly in the preparation of arrays of polynucleotides, these have invariably been assembled by firstly preparing the support, whether this be achieved by modification of a silica-based substrate, or formation of a PEM on a glass substrate, or formation of a hydrogel on glass or other solid supports. Only once the constitution of the solid support has been finalised is the array formed by reaction between the support and the molecules of interest. The array is then used, without further modification, in sequencing experiments whereby the molecules, typically polynucleotides are interrogated.

Surprising, we have found that certain modifications of molecular arrays, effected after their formation but before initiation of any manipulation of, e.g. interrogation of, the molecules in the array, lead to improved arrays in that the surface thereof may be rendered more passive and thus less reactive, towards molecules such as, for example, optionally labelled nucleotides used in oligonucleotide sequencing reactions.

Viewed from one aspect, therefore, the invention provides a method of modifying a molecular array, which molecular array comprises a plurality of biomolecules immobilised to a surface of a support, said method comprising the step of applying to the array polyelectrolyte or neutral polymers.

Viewed from a second aspect, the invention provides a molecular array obtainable according to the method of the first aspect of the invention.

Viewed from a third aspect, the invention provides the use of a molecular array according to the second aspect of the invention in the interrogation of the immobilised biomolecules.

The present invention will now be further described. In the following passages different aspects of the invention are defined in more detail. Each aspect so defined may be combined with any other aspect or aspects unless clearly indicated to the contrary. In particular any feature indicated as being preferred or advantageous may be combined with any other feature or features indicated as being preferred or advantageous.

### DETAILED DESCRIPTION OF THE INVENTION

The invention, as described and claimed herein, provides an improved method by which biomolecules (biological molecules) of interest, and preferably biomolecules such as polynucleotides and proteins (preferably polynucleotides) may be displayed by modifying existing, i.e. preprepared, arrays of molecules. It will be appreciated that, since the invention lies in the modification of existing molecular arrays, the nature of the molecular array treated according to the method of the invention is not of any particular importance. The nature of the biomolecules arrayed, or the means by which they are arrayed, is of lesser importance than the requirement for the modification step of the first aspect of the invention.

The biomolecules may thus be any biological molecule which it is desired to analyse. Of particular interest are proteins (including enzymes) and polynucleotides with polynucleotides being particularly preferred. As used herein, the term 'polynucleotide' refers to nucleic acids in general, including DNA (e.g. cDNA), RNA (e.g. mRNA) and synthetic analogs, e.g. PNA or 2'-O-methyl-RNA. DNA is preferred. On account of the particular utility of molecular arrays, preferably SMAs, most preferably SMAs of polynucleotides, in sequence determination methods, the subsequent discussion shall focus on this utility of the invention although it is to be understood that the invention is not to be considered as so limited.

Similarly, the make-up of the solid support of the array to be modified, or the type of the array to be modified is not of as great importance as the manner in which it is treated (modified) according to the invention. SMAs, however, and preferably SMAs of polynucleotides are particularly advantageous.

The term SMA as used herein refers to a population of polynucleotide molecules, distributed (or arrayed) over a solid support, wherein the spacing of any individual polynucleotide from all others of the population is such that it is possible to effect individual resolution, or interrogation, of the polynucleotides. The target nucleic acid molecules immobilised onto the surface of the solid support should thus be capable of being resolved by optical means. This means that, within the resolvable area of the particular imaging device used, there must be one or more distinct signals, each representing one polynucleotide. This may be achieved, preferably wherein the spacing between adjacent polynucleotide molecules on the array is at least 100 nm, more preferably at least 250 nm, still more preferably at least 300 nm, even more preferably at least 350 nm. Thus, each molecule is individually resolvable and detectable as a single molecule fluorescent point, and fluorescence from said single molecule fluorescent point also exhibits single step photobleaching.

Clusters of substantially identical molecules do not exhibit single point photobleaching under standard operating conditions used to detect/analyze molecules on arrays. The intensity of a single molecule fluorescence spot is constant for an anticipated period of time after which it disappears in a single step. In contrast, the intensity of a fluorescence spot comprised of two or more molecules, for example, disappears in two or more distinct and observable steps, as appropriate. The intensity of a fluorescence spot arising from a cluster consisting of thousands of similar molecules, such as those present on the arrays consisting of thousands of similar molecules at any given point, for example, would disappear in a pattern consistent with an exponential decay. The exponential decay pattern reflects the progressive loss of fluorescence by molecules present in the cluster and reveals that, over time, fewer and fewer molecules in the spot retain their fluorescence.

The method of the invention may be used in the method described in International Application WO 00/18957. This application describes a method of solid-phase nucleic acid amplification sequencing in which a large number of distinct nucleic acid molecules are arrayed and amplified simultaneously at high density via formation of nucleic acid colonies and the nucleic acid colonies are subsequently sequenced.

The support for the molecular array which is modified according to the invention is not limited to a particular matrix or substrate. Supports which may be of use in the practice of this invention thus include silica-based substrates, such as glass, fused silica and other silica-containing materials; they may also be silicone hydrides or plastic materials such as polyethylene, polystyrene, poly(vinyl chloride), polypropylene, nylons, polyesters, polycarbonates and poly(methyl methacrylate).

Preferably the support is silica-based but the shape of the support employed may be varied in accordance with the application in which the array is to be used. Generally, however, slides of support material, such as silica, e.g. fused silica, are of advantageous utility in the preparation and subsequent interrogration of molecules. Particularly preferred in the practice of the invention are fused silica slides sold under the trade name SPECTRASIL™. This notwithstanding, it will be evident to the skilled person that the invention is equally applicable to other presentations of solid support (including silica-based supports), such as beads, rods and the like.

Some supports to which biomolecules, such as nucleotides, are attached are silica-based supports themselves. These are generally covalently modified in some way so as to allow covalent attachment of either polynucleotides, or to immobilise a chemically reactive group hydrogel or a partially formed hydrogel (e.g. a prepolymer). The surface-activating agent is typically an organosilicon (organosilane) compound. Most commonly, it is γ-methacryloxypropyltrimethoxysilane, known as "Bind Silane" or "Crosslink Silane" and commercially available from Pharmacia, although other silicon-based surface-activating agents are also known, such as monoethoxydimethylsilylbutanal, 3-mercaptopropyltrimethoxysilane and 3-aminopropyltrimethoxysilane (all available from Aldrich). In this way, pendant functional groups such as amine groups, sulfhydryl groups, aldehydo groups or polymerisable groups (e.g. olefins) may be attached to the silica.

It will be understood that the terms such as "covalent surface-modification", "covalent surface-modifying" and "covalent surface-modified" do not embrace the simple cleaning and/or drying of substrates, particularly silica substrates, prior to their use. Generally such steps will be conducted prior to any polymerisation but do not constitute a surface-modifying step since no covalent modification of a surface is essentially effected by such steps.

Where the substrate is silica-based, cleaning will be achieved by contact with one or more organic solvents such as acetone, isopropanol (IPA), ethanol and the like, or with water or aqueous acidic or alkaline solutions such as dilute hydrochloric or sulphuric acids or dilute sodium hydroxide. Silica-based supports may be also cleaned by contact with a detergent solution (e.g. Decon 90). These various cleaning steps may be conducted individually or in combination, e.g. sequentially. Drying may be effected, for example, by heating of silica slides at temperatures of from 40°C to 200°C, preferably 80°C to 150°C for between 5 minutes to 24 hours, preferably at temperatures of around 120°C, and preferably for 1 to 2 hours.

The cleaning and drying steps described above will be and are understood by those skilled in the art not to constitute any form of covalent surface modification (and in particular no form of covalent surface modification in which an organosilicon (organosilane) moiety is attached). Such steps serve to effect removal of surface contamination (e.g. dirt or dust) and will generally be conducted prior to use of silica-based in most scientific applications. Heating of glass to very high temperatures (e.g. 1000°C or higher or even 300°C or higher) or by contact with materials known to dissolve, or etch glass (such as hydrofluoric acid), whilst unlikely to be conducted in the cleaning of silica-based substrates in advance of practice of this invention, is not to be considered as constituting a form of surface modification.

Other arrays in which polynucleotides are directly attached to silica-based supports are those for example disclosed in WO97/04131, wherein hairpin polynucleotides are immobilised on a glass support by reaction between a pendant epoxide group on the glass with an internal amino group held within the loop.

Zhao *et al* (Nucleic Acids Research, 2001, **29**(4), 955-959) disclose the formation of a hairpin polynucleotide which contains multiple phosphorothioate moieties in the loop. The moieties are used to anchor, in more than one position, the hairpin DNA to glass slides pre-activated with bromoacetamidopropylsilane.

The work of Zhao developed upon earlier work of Pirrung *et al* (*Langmuir,* 2000, **16,** 2185-2191) in which the authors report that 5'-thiophosphate-terminating oligonucleotides could be attached to glass, pre-activated with mono- and dialkoxylated silanes and bromoacetamide.

In addition, we disclose in our copending United Kingdom patent application number 0326073.4 arrays of hairpin polynucleotides attached to a solid support, e.g. for use in the preparation of SMAs, by reaction of a sulfur-based nucleophile with the solid support. The sulfur-based nucleophile may be directly attached to the hairpin although it is preferably indirectly attached through a linker. Attachment is by way of an internal nucleotide within the hairpin, that is to say that the sulfur-based nucleophile is not connected directly or through a linker to a nucleotide at either terminus of the hairpin.

Still further example arrays are those in which biomolecules, preferably polynucleotides, are attached to hydrogels supported upon silica-based or other solid supports. Silica-based supports are typically used to support hydrogels and hydrogel arrays, the subsequent discussion will focus on the use of silica-based supports, as described in for example:
- WO00/31148 which discloses polyacrylamide hydrogels and polyacrylamide hydrogel-based arrays in which a so-called polyacrylamide prepolymer is formed, preferably from acrylamide and a acrylic acid or an acrylic acid derivative containing a vinyl group. Crosslinking of the prepolymer may then be effected. The hydrogels so produced are solid-supported, preferably on glass. Functionalisation of the solid-supported hydrogel may also be effected;
- WO01/01143 which describes technology similar to WO00/31148 but differing in that the hydrogel bears functionality capable of participating in a [2+2] photocycloaddition reaction with a biomolecule so as to form immobilised arrays of such biomolecules. Dimethylmaleimide (DMI) is a particularly preferred functionality. The use of [2+2] photocycloaddition reactions, in the context of polyacrylamide-based microarray technology is also described in WO02/12566 and WO03/014392;
- US Patent No. 6,465,178 which discloses the use of reagent compositions in providing activated slides for use in preparing microarrays of nucleic acids; the reagent compositions include acrylamide copolymers. The activated slides are stated to be particularly well suited to replace conventional (e.g. silylated) glass slides in the preparation of microarrays; and
- WO00/53812 which discloses the preparation of polyacrylamide-based hydrogel arrays of DNA and the use of these arrays in replica amplification.

Once hydrogels such as those described above have been formed, it is necessary to attach molecules to them so as to produce the desired molecular arrays. Attachment has been effected in different ways in the prior art. For example, in US Patent No. 6,372,813, polynucleotides bearing dimethylmaleimide groups have been immobilised to the hydrogels produced which bear dimethylmaleimide groups by conducting a [2+2] photocycloaddition step between two dimethylmaleimide groups - one attached to the polynucleotide to be immobilised and one pendant from the hydrogel.

Where the molecular array is formed after generation of the hydrogel, two strategies have been employed to achieve this end. Firstly, the hydrogel may be modified chemically after it is produced. A more common alternative is to effect polymerisation with a comonomer having a functionality primed, or pre-activated, to react with the molecules to be arrayed.

Alternatives to initial formation of hydrogels followed by subsequent arraying of molecules thereto have been described in the prior art where the array is formed at the same time as the hydrogel is produced. This may be effected by, for example, direct copolymerisation of acrylamide-derivatized polynucleotides. An example of this approach is described in WO01/62982 in which acrylamide-derivatized polynucleotides are mixed with solutions of acrylamide and polymerisation is effected directly.

Mosaic Technologies (Boston, Massachusetts, USA) produce ACRYDITE™ (an acrylamide phosphoramidite) which can be reacted with polynucleotides prior to copolymerisation of the resultant monomer with acrylamide.

Efimov *et al*. (*Nucleic Acids Research,* 1999, **27** (22), 4416-4426) disclose a further example of a simultaneous formation of hydrogel/array in which copolymerisation of acrylamide, reactive acrylic acid derivatives and the modified polynucleotides having 5'- or 3'- terminal acrylamide groups is effected.

As described in our copending United Kingdom patent application number 0400253.1, the surface of the support for hydrogel need not be covalently modified in order for a hydrogel to be immobilised thereto. As described in that application, the step of covalent surface modification may be omitted when certain comonomer mixtures are used to produce a hydrogel. In particular, we describe in that application that a mixture of comonomers comprising at least one hydrophilic monomer and a functionalised comonomer (functionalised to the extent that the monomer once incorporated into the polymer is capable of binding the molecule of interest to the surface of the hydrogel) may be polymerised so as to form a hydrogel capable of being immobilised on a silica-based substrate.

More specifically, we describe in a method of preparing a hydrogel immobilised to a solid support comprising polymerising on said support a mixture of:
(i) a first comonomer which is acrylamide, methacrylamide, hydroxyethyl methacrylate or N-vinyl pyrrolidinone; and
(ii) a second comonomer which is a functionalised acrylamide or acrylate of formula (I):

   H₂C=C(H)-C(=O)-A-B-C (I);

   or a methacrylate or methacrylamide of formula (II):

   or H₂C=C(CH₃)-C(=O)-A-B-C- (II)

   (wherein:
   A is NR or O, wherein R is hydrogen or an optionally substituted saturated hydrocarbyl group comprising 1 to 5 carbon atoms;
   -B- is an optionally substituted alkylene biradical of formula -(CH₂)ₙ- wherein n is an integer from 1 to 50; and wherein n = 2 or more, one or more optionally substituted ethylene biradicals -CH₂CH₂- of said alkylene biradical may be independently replaced by ethenylene and ethynylene moieties; and wherein n=1 or more, one or more methylene biradicals -CH₂- may be replaced independently with an optionally substituted mono- or polycyclic hydrocarbon biradical comprising from 4 to 50 carbon atoms, or a corresponding heteromonocyclic or heteropolycyclic biradical wherein at least 1 CH₂ or CH₂ is substituted by an oxygen sulfur or nitrogen atom or an NH group; and
   C is a group for reaction with a compound to bind said compound covalently to said hydrogel) to form a polymerised product, characterised in that said method is conducted on, and immobilises the polymerised product to, said support which is not covalently surface-modified.

The solid supports for such hydrogels are preferably silica-based since the silca-based support need not be covalently modified by its preactivation with a silylating agent as described above in order to immobilise the hydrogel thereto. Clearly, however, such hydrogels may still be attached to silica-based supports which have been surface-activated, e.g. with an organosilane molecule as described above.

The surface-modification of silica-based solid supports by means other than covalent attachment of an organosilicon moiety is not excluded from the scope of this invention. Preferably, however, no activation of the silica - by covalent modification of a surface thereof or by any other means - is effected prior to effecting polymerisation thereon.

Generally, as is known in the art, polyacrylamide hydrogels are produced as thin sheets upon polymerisation of aqueous solutions of acrylamide solution. A multiply unsaturated (polysaturated) crosslinking agent (such as bisacrylamide) is generally present; the ratio of acrylamide to bisacrylamide is generally about 19:1. Such casting methods are well known in the art (see for example Sambrook et al., 2001, *Molecular Cloning, A Laboratory Manual,* 3rd Ed, Cold Spring Harbor Laboratory Press, Cold Spring Harbor Laboratory Press, NY) and need not be discussed in detail here.

Generally, however, the polymerisation will be conducted in an aqueous medium, and polymerisation initiated by any initiator. Potassium or ammonium persulfate as an initiator is typically employed. Tetramethylethylenediamine (TMEDA or TEMED) may be and generally is used to accelerate the polymerisation.

A further type of molecular array which may be treated according to this invention are PEM-supported molecular arrays of the type described by Braslavsky *et al* (infra), and Kartlov *et al*. (infra).

There are thus three main types of molecular array which may be treated according to this invention:
(1) arrays directly supported onto silica-based supports,
(2) hydrogel-based molecular arrays,
(3) PEM-supported molecular arrays.

Of these the hydrogel-based molecular arrays are most preferred, primarily because of the simplicity with which these may be constructed as described in our pending United Kingdom patent application number 0400253.1 Whilst, as we describe in that application, hydrogels are advantageous on account of the passivity of the surface, we have found that the surface treatment of this invention leads to still greater passivity, and thus utility in sequencing reactions and the like, of the resultant molecular arrays.

In the method of this invention the surface of an existing array of biomolecules, preferably polynucleotides, is modified by treatment with a mixture comprising polyelectrolyte a mixture comprising neutral polymers, or a mixture comprising both polyelectrolytes and neutral polymers.

Polyelectrolytes are large, generally polymeric, molecules containing a plurality of ionisable groups. Examples include polyallylamine (PAL), commercially available as polyallylamine hydrochloride (PAL.HCl), polyacrylic acid (PAA), poly(styrene sulfonate) (PSS) and polyethyleneimine (PEI). The degree to which they are ionised is dependent upon the pH of the medium in which they are present.

In the context of DNA sequencing, we have found that a combination of more than one polyelectrolyte is particularly advantageous when modifying molecular arrays. As an example, we have found that the sequential application of PAL.HCl followed by PAA to be particularly preferred.

The conditions under which the arrays may be treated include exposing them to solutions, or suspensions of polyelectrolyte or neutral polymer. Preferably these solutions or suspensions are aqueous. Particularly preferably the pH of the solution or suspension is higher than 6 and less than 8.5, more preferably from 6.5 to 8, still more preferably from 6.5 to 7.5, more preferably approximately neutral, or about pH 7.

As an alternative to polyelectrolytes, polyethylene glycols, such as those commercially available, e.g. PEG 8000 available from Sigma, may be used.

Of course both polyelectrolyte and polymers may be used.

It will be appreciated that the treatment of molecular arrays according to this invention shall generally, particularly in the case of planar arrays, serve to deposit layers of polyelectrolyte and/or polymers.

The hydrogels according to this invention are particularly useful where they are SMAs, particularly SMAs of polynucleotides.

When polynucleotides are arrayed in molecular arrays of the invention, these are preferably hairpin polynucleotides comprising a polynucleotide duplex which may be used to retain a primer and a target polynucleotide in spatial relationship. Preferably the target polynucleotide is present at the 5' end and the primer is present at the 3' end although hairpin polynucleotides where the primer is present at the 5' end and the target polynucleotide is present at the 3' end are also embraced by this invention.

As used herein, the term "interrogate" refers to the target polynucleotide functioning as a template upon which DNA polymerase acts. In other words, "interrogating" means contacting the target polynucleotides with another molecule, e.g., a polymerase, a nucleoside triphosphate, a complementary nucleic acid sequence, wherein the physical interaction provides information regarding a characteristic of the arrayed target polynucleotide. The contacting can involve covalent or non-covalent interactions with the other molecule. As used herein, "information regarding a characteristic" means information about the sequence of one or more nucleotides in the target polynucleotide, the length of the polynucleotide, the base composition of the polynucleotide, the Tₘ of the polynucleotide, the presence of a specific binding site for a polypeptide or other molecule, the presence of an adduct or modified nucleotide, or the three-dimensional structure of the polynucleotide.

The spatial relationship between primer and target polynucleotide present in hairpin polynucleotides permits improved sequence analysis procedures to be conducted. Maintenance of the spatial relationship is made possible not only by the hydrogen bonds formed on hybridisation, but also by the tethering of a known primer to the target polynucleotide. The fixing of the primer, as part of the hairpin structure, to the hydrogel support, ensures that the primer is able to perform its priming function during a polymerase-based sequencing procedure, and is not removed during any washing step in the procedure.

There are many different ways of forming a hairpin structure so as to incorporate the target polynucleotide. A preferred method is to form a first molecule (which may contain a non-backbone sulfur-based nucleophile attached through a linker) capable of forming a hairpin structure, and ligate the target polynucleotide to this. It is possible to ligate any desired target polynucleotide to the hairpin construct before or after arraying the hairpins on the solid support. Alternatively, a first polynucleotide may be ligated before arraying and a second ligated after arraying. It is, of course, also possible to introduce a nucleophile (preferably a sulfur-based nucleophile) after such a ligation.

Where a target polynucleotide is a double-stranded DNA, this may be attached to the stem of the hairpin by ligating one strand to the hairpin polynucleotide and removing the other strand after the ligation.

The target polynucleotide may be genomic DNA purified using conventional methods. The genomic DNA may be PCR-amplified or used directly to generate fragments of DNA using either restriction endonucleases, other suitable enzymes, a mechanical form of fragmentation or a non-enzymatic chemical fragmentation method. In the case of fragments generated by restriction endonucleases, hairpin structures bearing a complementary restriction site at the end of the first hairpin may be used, and selective ligation of one strand of the DNA sample fragments may be achieved by one of two methods.

Method 1 uses a hairpin containing a phosphorylated 5' end. Using this method, it may be necessary to first de-phosphorylate the restriction-cleaved genomic or other DNA fragments prior to ligation such that only one sample strand is covalently ligated to the hairpin.

Method 2: in the design of the hairpin, a single (or more) base gap can be incorporated at the 3' end (the receded strand) such that upon ligation of the DNA fragments only one strand is covalently joined to the hairpin. The base gap can be formed by hybridising a further separate polynucleotide to the 5'-end of the first hairpin structure. On ligation, the DNA fragment has one strand joined to the 5'-end of the first hairpin, and the other strand joined to the 3'-end of the further polynucleotide. The further polynucleotide (and the other stand of the fragment) may then be removed by disrupting hybridisation.

In either case, the net result should be covalent ligation of only one strand of a DNA fragment of genomic or other DNA to the hairpin. Such ligation reactions may be carried out in solution at optimised concentrations based on conventional ligation chemistry, for example, carried out by DNA ligases or non-enzymatic chemical ligation. Should the fragmented DNA be generated by random shearing of genomic DNA or polymerase, then the ends can be filled in with Klenow fragment to generate blunt-ended fragments which may be blunt-end-ligated onto blunt-ended hairpins. Alternatively, the blunt-ended DNA fragments may be ligated to polynucleotide adapters which are designed to allow compatible ligation with the sticky-end hairpins, in the manner described hereinbefore.

Polynucleotides, particularly hairpin polynucleotides, may be bound directly to the "C" groups of the hydrogels as described herein with reference to our copending United Kingdom patent application number 0400253.1 by, for example, immobilising them through a covalent bond between each polynucleotide (by way of a nucleophile, preferably a sulfur-based nucleophile) and the C group. In doing so it is thus possible to generate arrays, e.g. microarrays or SMAs, preferably SMAs, of the hairpin polynucleotides.

The precise density of the arrays is not critical. For single molecule resolution, in fact, the higher the density of hairpin polynucleotide molecules arrayed the better since more information may be obtained from any one experiment. For example, there may be at least 10³ molecules/cm², preferably at least 10⁵ molecules/cm² and most preferably 10⁶-10⁹ molecules/cm². Particularly preferably, the density of sample molecules is at least 10⁷/cm², typically it is approximately 10⁸-10⁹ /cm².

Such "high density" arrays are in contrast to those arrays such as those so described in the prior art which are not necessarily as high or, e.g. in the many molecule arrays of Fodor *et al*. (*supra*), which comprise clusters of polynucleotides comprising a plurality of tightly packed polynucleotides that are resolvable at the level of the cluster, not at the level of the polynucleotides, are too high to allow single molecule resolution. By arraying the polynucleotides at a density that they can be considered to be single molecules, i.e. each can be individually resolved, a SMA is created.

The terms "individually resolved" and "individual resolution" are used herein to specify that, when visualised, it is possible to distinguish one molecule on the array from its neighbouring molecules. Separation between individual molecules on the array will be determined, in part, by the particular technique used to resolve the individual molecules. It will usually be the target polynucleotide portion that is individually resolved, as it is this component which is intended to be interrogated, e.g. by the incorporation of detectable bases.

Arrays of polynucleotides according to the invention may be used in procedures to determine the sequence of the target polynucleotide. For example, the arrays may be used to determine the properties or identities of cognate molecules. Typically, interaction of biological or chemical molecules with the arrays are carried out in solution.

In particular, the arrays may be used in assays which rely on the detection of fluorescent labels to obtain information on the arrayed polynucleotides. The arrays are particularly suitable for use in multi-step assays where the loss of synchronisation in the steps was previously regarded as a limitation to the use of arrays. The arrays may be used in conventional techniques for obtaining genetic sequence information. Many of these techniques rely on the stepwise identification of suitably labelled nucleotides, referred to in US Patent No. 5,654,413 as "single base" sequencing methods.

In an embodiment of the invention, the sequence of a target polynucleotide is determined in a similar manner to that described in US Patent No. 5,654,413, by detecting the incorporation of nucleotides into the nascent strand through the detection of a fluorescent label attached to the incorporated nucleotide. The target polynucleotide is primed with a suitable primer (or prepared as a hairpin construct which will contain the primer as part of the hairpin), and the nascent chain is extended in a stepwise manner by the polymerase reaction. Each of the different nucleotides (A, T, G and C) incorporated a unique fluorophore at the 3' position which acts as a blocking group to prevent uncontrolled polymerisation. The polymerase enzyme incorporates a nucleotide into the nascent chain complementary to the target polynucleotide, and the blocking group prevents further incorporation of nucleotides. The array surface is then cleared of unincorporated nucleotides and each incorporated nucleotide is "read" optically by a charge-coupled device using laser excitation and filters. The 3'-blocking group is then removed (deprotected), to expose the nascent chain for further nucleotide incorporation.

Similarly, US Patent No. 5,302,509 discloses a method to sequence polynucleotides immobilised on a solid support. The method relies on the incorporation of fluorescently-labelled, 3'-blocked bases A, G, C and T to the immobilised polynucleotide, in the presence of DNA polymerase. The polymerase incorporates a base complementary to the target polynucleotide, but is prevented from further addition by the 3'-blocking group. The label of the incorporated base can then be determined and the blocking group removed by chemical cleavage to allow further polymerisation to occur.

Because the array consists of distinct optically resolvable polynucleotides, each target polynucleotide will generate a series of distinct signals as the fluorescent events are detected. Details of the full sequence are then determined.

The term "individually resolved by optical microscopy" is used herein to indicate that, when visualised, it is possible to distinguish at least one polynucleotide on the array from its neighbouring polynucleotides using optical microscopy methods available in the art. Visualisation may be effected by the use of reporter labels, e.g., fluorophores, the signal of which is individually resolved.

Other suitable sequencing procedures will be apparent to the skilled person. In particular, the sequencing method may rely on the degradation of the arrayed polynucleotides, the degradation products being characterised to determine the sequence.

An example of a suitable degradation technique is disclosed in WO95/20053, whereby bases on a polynucleotide are removed sequentially, a predetermined number at a time, through the use of labelled adaptors specific for the bases, and a defined exonuclease cleavage.

A consequence of sequencing using non-destructive methods is that it is possible to form a spatially addressable array for further characterisation studies, and therefore non-destructive sequencing may be preferred. In this context, the term "spatially addressable" is used herein to describe how different molecules may be identified on the basis of their position on an array.

In the case that the target polynucleotide fragments are generated via restriction digest of genomic DNA, the recognition sequence of the restriction or other nuclease enzyme will provide 4, 6, 8 bases or more of known sequence (dependent on the enzyme). Further sequencing of between 10 and 20 bases on the SMA should provide sufficient overall sequence information to place that stretch of DNA into unique context with a total human genome sequence, thus enabling the sequence information to be used for genotyping and more specifically single nucleotide polymorphism (SNP) scoring.

The sequencing method that is used to characterise the bound target may be any known in the art that measures the sequential incorporation of bases onto an extending strand. A suitable technique is disclosed in US Patent No. 5,302,509 requiring the monitoring of sequential incorporation of fluorescently-labelled bases onto a complement using the polymerase reaction. Alternatives will be apparent to the skilled person. Suitable reagents, including fluorescently-labelled nucleotides will be apparent to the skilled person.

Thus the devices into which the arrays of this invention may be incorporated include, for example, a sequencing machine or genetic analysis machine.

The single polynucleotides immobilised onto the surface of a solid support should be capable of being resolved by optical means. This means that, within the resolvable area of the particular imaging device used, there must be one or more distinct signals, each representing one polynucleotide. Typically, the polynucleotides of the array are resolved using a single molecule fluorescence microscope equipped with a sensitive detector, e.g., a charge-coupled device (CCD). Each polynucleotide of the array may be imaged simultaneously or, by scanning the array, a fast sequential analysis can be performed.

The extent of separation between the individual polynucleotides on the array will be determined, in part, by the particular technique used to resolve the individual polynucleotide. Apparatus used to image molecular arrays are known to those skilled in the art. For example, a confocal scanning microscope may be used to scan the surface of the array with a laser to image directly a fluorophore incorporated on the individual polynucleotide by fluorescence. Alternatively, a sensitive 2-D detector, such as a charge-coupled device, can be used to provide a 2-D image representing the individual polynucleotides on the array

"Resolving" single polynucleotides on the array with a 2-D detector can be done if, at 100 x magnification, adjacent polynucleotides are separated by a distance of approximately at least 250 nm, preferably at lest 300 nm and more preferably at least 350 nm. It will be appreciated that these distances are dependent on magnification, and that other values can be determined accordingly, by one of ordinary skill in the art.

Other techniques such as scanning near-field optical microscopy (SNOM) are available which are capable of greater optical resolution, thereby permitting more dense arrays to be used. For example, using SNOM, adjacent polynucleotides may be separated by a distance of less than 100 nm, e.g., 10 nm. For a description of scanning near-field optical microscopy, see Moyer *et al., Laser Focus World* (1993) 29(10).

An additional technique that may be used is surface-specific total internal reflection fluorescence microscopy (TIRFM); see, for example, Vale *et al., Nature (1996)* 380:451-453). Using this technique, it is possible to achieve wide-field imaging (up to 100 µm x 100 µm) with single molecule sensitivity. This may allow arrays of greater than 10⁷ resolvable polynucleotides per cm² to be used.

Additionally, the techniques of scanning tunnelling microscopy (Binnig et al., *Helvetica Physica Acta* (1982) 55:726-735) and atomic force microscopy (Hansma et al., *Ann. Rev. Biophys. Biomol. Struct.* (1994) 23:115-139) are suitable for imaging the arrays of the present invention. Other devices which do not rely on microscopy may also be used, provided that they are capable of imaging within discrete areas on a solid support.

Once sequenced, the spatially addressed arrays may be used in a variety of procedures which require the characterisation of individual molecules from heterogeneous populations.

The invention may be understood with reference to the following examples which are to be understood as illustrative, and not limitative, of the present invention.

### Example 1 - Demonstration that treatment of a polyelectrolyte-treated fused silica-supported hydrogel is more passive towards functionalised labelled nucleotides when compared to a non-treated control

A polyacrylamide-based is prepared as follows:
**Cleaning of glass slides** - The glass slides used for the preparation of the hydrogel surfaces were cleaned using the following in-house protocol: the slides were sequentially incubated in Decon ™, 1M aqueous sodium hydroxide and finally 0.1 M hydrochloric acid (aq). After each step, the slides were sonicated in MilliQ H₂O. The cleaned slides were stored in ethanol.
**Binder silanization of the glass slides (optional)** - The cleaned glass slides were baked at 120°C for two hours prior to silanization. After cooling down in a dessicator filled with argon, the slides were incubated at room temperature in a 2% v/v solution of either 3-(trimethoxylsilyl)propyl methacrylate or (3-acryloxypropyl)trimethoxy silane in toluene HPLC grade. The slides were then rinsed carefully with toluene and cured for two hours at 120°C. The silanized slides were stored in a dessicator filled with argon.
**Preparation of the polymerisation mixture** - Acrylamide (Purity 99 +%, 0.4 g) was dissolved in MilliQ H₂O (10 mls) (Solution I). Potassium or ammonium persulfate (0.25 g) was dissolved in MilliQ H₂O (5 ml) (Solution II). N-(5-bromoacetamidylpentyl)acrylamide (BRAPA) (33 mg) were dissolved in DMF (330 µl) (Solution III).

Solution I was degassed 10 minutes with argon. Solution III was added to solution I. After mixing, N, N, N',N'-tetramethylethylenediamine (TEMED) (23 µl) was added to the mixture. Finally solution II (200 µl) was added. The polymerisation mixture was rapidly reacted with the silanized slides according to one of the following protocols. The hydrogel is made from acrylamide (2%) and BRAPA (1%).

### Application of the polyacrylamide hydrogel to the glass slides

**Method I** - Two slides (optionally silanised) were assembled with a silicon gasket in between to form a polymerisation cell. The slides and the gasket were held together with binder clips. Polymerisation mixture (800 µl) was injected in each polymerisation cell. The polymerisation proceeded at room temperature for 1.5 hr. The polymerisation cells were then disassembled and the slides washed thoroughly under running MilliQ H₂O. The slides were then dried and stored under argon.

**Method II** - Slides (optionally silanised) were put into a clean coplin jar. The polymerisation mixture was poured into the jar to cover the slides. The polymerisation proceeded at room temperature for 1.5 hr. The slides were then removed from the coplin jar one by one and rinsed under running MilliQ H₂O. The slides were then introduced in clean plastic vials containing MilliQ H₂O and vortexed for 20 seconds. The slides were rinsed with running MilliQ H₂O, dried and stored under argon.

### Pretreatment with polyallylamine hydrochloride followed by polyacrylic acid

Treatment of a polyacrylamide hydrogel comprising 1 mol % BRAPA, as described above, is effected by contacting the hydrogel with a solution of polyallylamine hydrochloride (2 mg/ml) MilliQ H₂O at pH 8. Contacting is effected for 30 min at room temperature after which the solution is treated with polyacrylic acid (2 mg/ml MilliQ H₂O at pH 8.2). The solution is incubated for 30 min at room temperature followed by treatment with MilliQ H₂O. The surface treated with the two layers of polyelectrolyte demonstrates a reduction in sticking of fluorescently functionalised nucleotides when compared to a control hydrogel surface not treated with the polyelectrolytes.

### Example 2 - Demonstration that of a poly(ethylene glycol)-treated fused silica-supported hydrogel is more passive towards functionalised labelled nucleotides when compared to a non-treated control

Example 1 was repeated except that instead of treatment with polyallylamine hydrochloride following by polyacrylic acid, the hydrogel prepared as in example 1 is treated with poly(ethylene glycol) 8000 (Sigma). The surface treated with the poly(ethylene glycol) 8000 demonstrates a reduction in sticking of fluorescently functionalised nucleotides when compared to a control hydrogel surface not treated with the poly(ethylene glycol) 8000.

### Example 3 - Demonstration that treatment of a polyelectrolyte- or poly(ethylene glycol)-treated fused silica-supported hydrogel-based molecular array is more passive towards functionalised labelled nucleotides when compared to a non-treated control

Examples 1 and 2 are repeated except that instead of applying the polyelectrolytes or poly(ethylene glycol) to a fused silica-supported hydrogel as such, instead an array of polynucleotides is treated and the arrays so modified used in sequencing reactions with fluorescently labelled nucleotides. The surfaces treated with either the two layers of polyelectrolyte, or the poly(ethylene glycol) 8000, demonstrate a reduction in sticking of fluorescently functionalised nucleotides when compared to a control hydrogel surfaces not so treated.

All patents, patent applications, and published references cited herein are hereby incorporated by reference in their entirety. While this invention has been particularly shown and described with references to preferred embodiments, it will be understood by those skilled in the art that various changes in form and details may be made without departing from the scope of the invention encompassed by the claims.

## Claims

1. A method of modifying a molecular array, which molecular array comprises a plurality of biomolecules immobilised to a surface of a support, said method comprising the step of applying to the array polyelectrolyte or neutral polymers.

2. The method of claim 1 wherein the support is comprised of a member selected from the group comprising silica-based substrates, hydrogels and polyelectrolyte multilayers.

3. The method of claim 2 wherein the biomolecules are attached directly or through a linking moiety to a silica-based support.

4. The method of claim 2 wherein the hydrogel is a polyacrylamide hydrogel.

5. The method of claim 2 wherein the polyelectrolyte multilayer comprises 1 or more layers of each of polyallylamine and polyacrylic acid wherein the surface to which the biomolecules are attached comprises polyacrylic acid.

6. The method of claim 2 wherein the hydrogel is obtainable by a method comprising polymerising on a solid support a mixture of:
(i) a first comonomer which is acrylamide, methacrylamide, hydroxyethyl methacrylate or N-vinyl pyrrolidinone; and
(ii) a second comonomer which is a functionalised acrylamide or acrylate of formula (I):
H₂C=C(H)-C(=O)-A-B-C (I);
or a methacrylate or methacrylamide of formula (II):
or H₂C=C(CH₃)-C(=O)-A-B-C- (II)
(wherein:
A is NR or O, wherein R is hydrogen or an optionally substituted saturated hydrocarbyl group comprising 1 to 5 carbon atoms;
-B- is an optionally substituted alkylene biradical of formula -(CH₂)ₙ- wherein n is an integer from 1 to 50; and wherein n = 2 or more, one or more optionally substituted ethylene biradicals -CH₂CH₂- of said alkylene biradical may be independently replaced by ethenylene and ethynylene moieties; and wherein n=1 or more, one or more methylene biradicals -CH₂- may be replaced independently with an optionally substituted mono- or polycyclic hydrocarbon biradical comprising from 4 to 50 carbon atoms, or a corresponding heteromonocyclic or heteropolycyclic biradical wherein at least 1 CH₂ or CH₂ is substituted by an oxygen sulfur or nitrogen atom or an NH group; and
C is a group for reaction with a compound to bind said compound covalently to said hydrogel) to form a polymerised product,
wherein said polymerising is conducted on, and immobilises the polymerised product to, said solid support which is not covalently surface-modified.

7. The method as claimed in claim 6 wherein said solid support is a silica-based support.

8. The method as claimed in claim 7 wherein said silica-based solid support is fused silica.

9. The method as claimed in claim 7 or claim 8 wherein said silica-based support is SPECTRASIL™.

10. The method as claimed in any one of claims 6 to 9 wherein said first comonomer is acrylamide.

11. The method as claimed in any one of claims 6 to 10 wherein said second comonomer is an acrylamide of formula (I).

12. The method as claimed in claim 11 wherein said acrylamide of formula (I) has A = NH.

13. The method as claimed in claim 11 or claim 12 wherein - B- is a C₂-C₁₀ alkylene biradical.

14. The method as claimed in claim 13 wherein -B- is - (CH₂)₅-.

15. The method as claimed in any one of claims 11 to 14 wherein C is hydroxyl, thiol, amine, acid, ester or haloacetamido.

16. The method as claimed in claim 15 wherein said haloacetamide is bromoacetamide.

17. The method as claimed in any one of claims 11 to 16 wherein said acrylamide is N-(5-bromoacetamidylpentyl) acrylamide (BRAPA).

18. The method as claimed in any one of claims 6 to 17 wherein said second comonomer is present in an amount of ≥1 mol% relative to the total molar quantity of comonomers.

19. The method as claimed in claim 18 wherein said second comonomer is present in an amount of ≥2 mol% relative to the total molar quantity of total comonomers.

20. The method as claimed in any one of claims 6 to 19 wherein no polysaturated crosslinking agent is present during said polymerising.

21. The method of any preceding claim wherein said biomolecules are proteins or polynucleotides.

22. The method of claim 21 wherein said biomolecules are polynucleotides of which at least a portion of each is single-stranded.

23. The method of any one preceding claim wherein said biomolecules are hairpin polynucleotides.

24. The method of any one preceding claim wherein the polyelectrolyte applied is polyacrylic acid.

25. The method of any one preceding claim wherein polyallylamine is applied to the array followed by polyacrylic acid.

26. The method of any one of claims 1 to 23 wherein the neutral polymer is polyethylene glycol.

27. The method of any one preceding claim wherein the method comprises modifying a microarray or a single molecule array.

28. The method of any one preceding claim wherein the array is a single molecule array.

29. A molecular array obtainable by a method defined in any one preceding claim.

30. Use of a molecular array as defined in claim 29 in the interrogation of the immobilised biomolecules.
